# FASCICULE DE BREVET EUROPEEN

(11) **EP 3 777 522 B1**
(45) Date de publication et mention de la délivrance du brevet: **03.04.2024**
(21) Numéro de dépôt: 20190607.0
(22) Date de dépôt: 12.08.2020
(51) Int. Cl.: A01G 15/00, E02B 1/00, E02B 3/04

(54) **INSTALLATION CÔTIÈRE DE GESTION DE PHÉNOMÈNES MÉTÉOROLOGIQUES**
KÜSTENANLAGE ZUM MANAGEMENT VON WETTERPHÄNOMENEN
COASTAL SYSTEM FOR MANAGING METEOROLOGICAL PHENOMENA

(30) Priorité: 12.08.2019 FR 1909171
(43) Date de publication de la demande: 17.02.2021
(73) Titulaire: Piufortavi, 06160 Antibes (FR)
(72) Inventeur: SCATOLIN, Gino, 06600 ANTIBES (FR)
(74) Mandataire: AtlantIP International

(56) Documents cités:
- WO-A1-2011/011370
- CN-B- 101 403 472
- FR-A1- 2 860 530
- US-A- 3 803 849
- US-A- 6 057 606
- US-A1- 2010 051 714

## Description

La présente invention se rapporte aux systèmes de gestion de phénomènes météorologiques. Plus particulièrement, la présente invention est une installation côtière visant à gérer, voire empêcher, l'apparition de certains phénomènes météorologiques.

En effet, depuis les années 70 et face à la prise de conscience du réchauffement climatique en cours, les études ont démontré que certains phénomènes météorologiques violents, tels que des cyclones dans l'océan Indien, les ouragans dans la partie nord de l'océan Atlantique ou les typhons dans l'océan Pacifique, voyaient leurs fréquences et intensités augmenter du fait de l'élévation moyenne des températures des eaux océaniques de surface. On a pu ainsi observer en 2017 un cyclone présentant des vents soufflant à 350 km/h.

Plus particulièrement, un ouragan (ou un typhon ou un cyclone) est un phénomène météorologique, qui prend naissance en mer, dont la formation et l'intensité dépendent notamment des températures de surface des eaux océaniques.

Cependant, les études ont pu démontrer que d'autres conditions étaient également nécessaires pour la création d'un ouragan (ou d'un cyclone...), telles que :
- un taux d'humidité supérieur à 70%, comme cela est le cas dans la zone de convergence intertropicale, pour favoriser la formation de masses nuageuses de type cumulonimbus ;
- une absence de vent en altitude afin de ne pas disperser les nuages convectifs ;
- un gradient de pression pour permettre la mise en mouvement de masses d'air humide et provoquer une dépression ;
- une position géographique du lieu de formation dudit ouragan éloignée de l'équateur de quelques degrés de latitude pour que la valeur de la pseudo-force de Coriolis ne soit pas nulle, favorisant ainsi la création d'un mouvement circulaire des masses d'air ;
- un apport en air chaud et humide provenant des échanges gazeux entre l'océan et l'atmosphère.

Concernant les échanges entre l'océan et l'atmosphère, on notera que ceux-ci s'effectuent principalement dans les couches supérieures (ou superficielles) de l'océan, c'est-à-dire au-dessus de la thermocline (les eaux situées en dessous de cette couche de mélange superficielle constituent la thermocline, les eaux de la thermocline subissant une décroissance très rapide des températures en fonction de la profondeur. Ces eaux présentent des températures très basses et ne participent donc pas à la création des phénomènes météorologiques considérés).

En effet, pour favoriser la formation d'un cyclone, il est nécessaire que la température de l'eau de surface, c'est-à-dire au niveau de la couche d'eau entre la thermocline et la surface, soit supérieure à 26°C et cela sur une épaisseur d'au moins 50 mètres.

Ainsi, certaines zones sont considérées comme des « nurseries » à ouragan (ou cyclone), par exemple les zones maritimes connexes aux îles situées loin des côtes continentales. On peut par exemple penser à la zone maritime à l'ouest de l'archipel du Cap Vert qui est alimentée en eaux très chaudes produites au niveau du plateau continental des îles constituant le Cap-Vert, les eaux étant amenées dans la zone de formation des ouragans par le courant équatorial nord et les vents alizés. On notera par ailleurs que des études ont permis de démontrer que 95% des cyclones de l'Atlantique Nord, sur la période allant de 1988 à 2017, ont pris naissance aux alentours de l'archipel du Cap Vert.

En effet, ces îles présentent une disposition particulière qui bloque la circulation océanique du courant des Canaries, courant transportant des eaux froides issues de la remontée naturelle des eaux (également désigné sous le terme « upwelling » en langue anglaise) profondes (et donc froides) en surface, comme cela peut se produire au niveau des côtes marocaines, mauritaniennes et sénégalaises. Ainsi, à proximité de l'archipel du Cap Vert, les eaux de surfaces présentent des températures supérieures à 28°C durant l'été (notamment en raison du rayonnement solaire) ce qui alimente la formation d'ouragans en Atlantique Nord.

Bien sûr, l'archipel du Cap-Vert n'est ici donné qu'à titre d'exemple, d'autres îles ou lieux, tels que l'archipel des Chagos, les Comores, les îles Éparses dans l'océan Indien, l'archipel des Mariannes dans le Pacifique Nord remplissent également ces critères et sont donc à même d'être des lieux de formation de phénomènes météorologiques destructeurs.

On constate donc l'urgence à trouver une solution pour diminuer, voire empêcher, la formation de tels phénomènes météorologiques, ou du moins limiter leur intensité, ce type de phénomènes provoquant des pertes en vies en humaines et des dégâts matériels se chiffrant parfois à plusieurs milliards d'euros (on peut notamment penser à l'ouragan Irma de 2017 ayant provoqué 134 morts et des dommages matériels évalués à 67,8 milliards de dollars).

WO2011/011370A1 et CN101403472B divulguent une installation côtière de gestion des phénomènes météorologiques.

L'invention est une installation côtière de gestion des phénomènes météorologiques selon la revendication 1, ladite installation comprenant :
- des conduits partant de ladite installation et s'étendant jusqu'à une profondeur située en dessous de la couche océanique de mélange (donc de préférence au niveau de la thermocline, et dans une zone où les eaux présentent avantageusement une température inférieure à 18 °C) ;
- des pompes permettant de pomper de l'eau, telle que de l'eau située en dessous de la couche océanique de mélange (notamment par l'intermédiaire desdits conduits) jusqu'à ladite installation ;
- des moyens de dispersion des eaux pompées permettant de mélanger lesdites eaux pompées aux eaux océaniques de surface ;
- au moins un puits qui est relié, d'une part, aux pompes par un ou plusieurs tuyaux , et, d'autre part, aux conduits, ledit au moins un puits se remplissant, par l'intermédiaire des conduits, d'eau provenant d'en dessous de la couche océanique de mélange par un effet de vase communicant.

Ladite installation permet ainsi de pomper des eaux situées en dessous de la couche de mélange, présentant de préférence une différence de température d'au moins 10°C avec les eaux de surface, pour mélanger, par l'intermédiaire des moyens de dispersion, cette eau pompée aux eaux de surface. Cela a pour conséquence de diminuer la température des eaux de surface et ainsi de limiter l'apparition de phénomènes météorologiques violents et/ou de diminuer leur intensité.

Par ailleurs, le mélange d'eau issue des profondeurs, riche en nutriments, avec de l'eau de surface favorise le développement de la faune et de la flore, contribuant ainsi à la prospérité de la pêche et de l'aquaculture.

On notera également que l'apport d'eaux froides favorise l'absorption du dioxyde de carbone atmosphérique par les eaux océaniques de surface.

Ladite installation permet également de lutter contre le réchauffement climatique, par exemple en diminuant de 2 degrés la température des eaux de surface des eaux aux alentours d'îles tropicales d'origine volcanique ayant un plateau continental, on diminue la production de vapeur d'eau dans l'atmosphère (gaz qui est également un gaz à effet de serre). Par ailleurs, le refroidissement local des eaux de surface de certains lieux situés dans la zone équatoriale entraine également une diminution de la température des masses d'air générées localement. L'invention présente donc également l'avantage de diminuer la fréquence et/ou l'intensité d'évènements caniculaires dans les zones non équatoriales (c'est-à-dire de limiter les longues périodes pendant lesquelles les températures sont au-dessus des normales saisonnières).

Selon une caractéristique possible, ladite installation comprend des moyens d'alimentation électrique, tels que des panneaux photovoltaïques et/ou des éoliennes.

Le fait de doter ladite installation côtière de moyens d'alimentation électrique permet de rendre celle-ci autonome énergétiquement. De plus, mixer plusieurs moyens d'alimentation différents et complémentaires permet à l'installation fonctionner le jour et au moins une partie de la nuit, et de préférence au moins 20 heures par jour.

Selon une autre caractéristique possible, l'installation est disposée en limite de côte ou en bordure de plage, et de préférence à proximité de terres émergées possédant un plateau continental, par exemple par l'intermédiaire de fondations en béton.

En effet, il est moins couteux de construire ladite installation en bordure de plage ou en eaux peu profondes (à proximité de la côte donc), car il est plus aisé d'y construire des fondations en béton et ainsi de réaliser une structure plus durable face aux intempéries ou à divers événements naturels.

Par ailleurs, cette disposition permet également de rafraichir l'air à proximité de la plage.

Selon une autre caractéristique possible, les moyens d'alimentation électriques sont situés à distance des moyens de dispersion et sont reliés aux pompes (nécessitant un approvisionnant en électricité) par des lignes électriques enterrées.

Lesdits moyens d'alimentation sont par exemple situés à une distance d'au moins 5 km, dans les terres, des pompes, ceci afin de limiter les effets corrosifs de l'eau de mer sur lesdits moyens. De plus, en cas d'intempérie, cela réduit les risques de panne et les risques liés aux interventions dans le cadre d'une maintenance ou d'une réparation. Par ailleurs, la disposition desdits moyens d'alimentation dans les terres permet de réduire la pollution visuelle et sonore en bord de plage, lieux généralement touristiques.

Selon une autre caractéristique possible, lesdites pompes sont des pompes immergées et/ou électriques.

Les pompes sont préférentiellement des pompes électriques immergées disposées dans les conduits à des profondeurs comprises entre 1,5 et 4 mètres, afin de ne pas être sensibles aux phénomènes de marnage.

Selon une autre caractéristique possible, lesdits conduits sont posés sur le fond marin.

Les conduits sont ainsi à l'abri des intempéries et de l'air. De plus, lesdits conduits sont avantageusement réalisés en aciers spéciaux résistants à l'eau de mer et présentent un diamètre normalisé de 8 pouces (soit environ 20,32 cm).

Selon une autre caractéristique possible, l'une des extrémités desdits conduits est située à une profondeur supérieure à 70 mètres.

Selon une autre caractéristique possible, les moyens de dispersion sont des canons à eau.

Les canons à eau sont un moyen peu onéreux nécessitant une maintenance faible et permettant de disperser les eaux pompées sur une grande surface, favorisant ainsi le mélange entre eaux océaniques de surface et eaux pompées.

De plus, le fait d'utiliser des canons à eau entraine la formation de gouttelettes d'eau froide dans l'atmosphère qui vont limiter, voire empêcher, les échanges entre l'atmosphère et la couche océanique de surface, limitant ainsi l'évaporation des eaux chaudes de surface. Par ailleurs, ces gouttelettes en suspension limitent également le réchauffement des eaux de surface par les rayons du soleil.

Selon une autre caractéristique possible, lesdits moyens composant ladite installation sont disposés de manière régulière autour d'une île.

Afin d'optimiser le refroidissement des eaux de surface, il est avantageux de disposer des pompes et des moyens de dispersion à intervalle régulier sur le pourtour d'une île (ou encore le long d'une côte).

Selon une autre caractéristique possible, ladite installation présente des fondations en béton sur lesquelles sont disposés les moyens de dispersion des eaux pompées.

Selon une autre caractéristique possible, chacun des conduits et/ou moyens de dispersion est alimenté par au moins une pompe.

Selon une autre caractéristique possible, ladite installation comprend un module de désalinisation d'eau de mer, au moins un desdits conduits comprenant par exemple une dérivation alimentant ledit module de désalinisation.

En effet, il est avantageux de pouvoir alimenter en eaux potables les populations vivant aux alentours de ladite installation, et notamment sur des îles.

L'invention sera mieux comprise, et d'autres buts, détails, caractéristiques et avantages de celles-ci apparaîtront plus clairement au cours de la description suivante de modes de réalisation particuliers de l'invention, donnée uniquement à titre illustratif et non limitatif, en référence aux dessins annexés, sur lesquels :
- La figure 1 est une représentation schématique en perspective de dessus d'une installation pas selon l'invention ;
- la figure 2 est une vue très schématique, et en coupe de l'installation de la figure 1 ;
- la figure 3 est une vue agrandie d'une partie de l'installation de la figure 1 ;
- la figure 4 est une représentation très schématique et en coupe d'une installation selon l'inventior

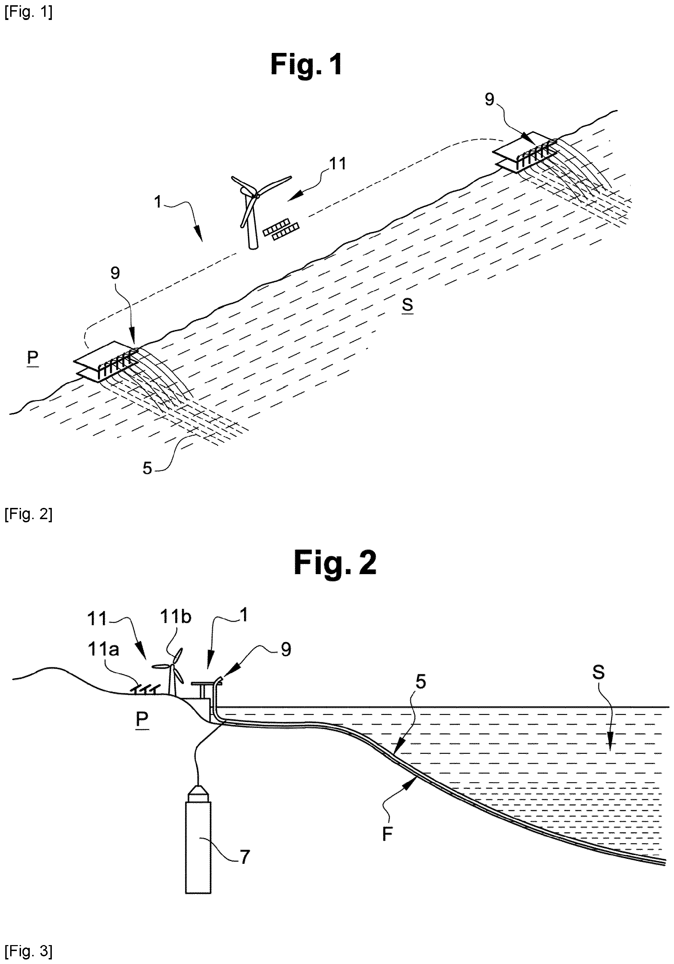

Les modes de réalisation représentés dans les figures 1-3 ne font pas partie de l'invention mais représentent des éléments de l'état de la technique qui sont utiles à la compréhension de l'invention.

La figure 1 est ainsi une représentation schématique, en perspective et de dessus d'une installation 1 côtière de gestion des phénomènes météorologiques.

Plus particulièrement, l'installation 1 côtière est disposée en bordure de plage P.

Comme cela est plus particulièrement illustré à la figure 2, l'installation 1 comprend :
- des conduits 5, disposé sur les fonds marins F (c'est-à-dire à même le sol), partant de ladite installation 1 et s'étendant en direction de l'océan S ;
- des pompes 7 permettant de pomper de l'eau à travers lesdits conduits 5 jusqu'à ladite installation 1 ;
- des moyens de dispersion 9 des eaux pompées permettant de mélanger lesdites eaux pompées aux eaux de surface ;
- des moyens d'alimentation 11 électrique destinés à alimenter en énergie lesdites pompes 7.

Les conduits 5 sont par exemple des conduits en acier résistant à la corrosion et qui présentent un diamètre normalisé de 8 pouces, identiques aux conduits utilisés dans l'industrie pétrolière.

Plus particulièrement, les conduits 5 s'étendent jusqu'à une profondeur située en dessous de la couche de mélange ou au niveau de la thermocline, c'est-à-dire dans une zone où les eaux océaniques présentent des températures égales ou inférieures à 18°C.

Les pompes 7, quant à elles, sont préférentiellement des pompes immergées et électriques disposées à l'intérieur desdits conduits 5 (au moins une pompe par conduit). De plus, lesdites pompes 7 sont disposées à des profondeurs comprises entre 1,5 mètre et 4 mètres, pour d'une part, éviter le désamorçage des pompes lors du marnage, et d'autre part, limiter le coût d'installation desdites pompes (en effet, lorsque les profondeurs deviennent trop importantes, l'installation des pompes nécessite un matériel spécifique onéreux).

Dans une variante de réalisation non représentée, les pompes 7 sont des pompes dites de surface (donc non immergées) disposées dans un local aménagé à au moins 3 mètres sous le niveau de la mer. Cela présente l'avantage de réduire le coût des pompes et l'entretien de ces dernières, en contrepartie d'un investissement plus important lié à la construction de locaux sous-marins dédiés pour accueillir lesdites pompes.

Les moyens de dispersion 9, dans le présent exemple, sont des canons à eau permettant de disperser de façon aérienne les eaux froides pompées dans les profondeurs de l'océan. On notera que les canons à eaux 9 sont par exemple reliés à la tête de pompe 7 par l'intermédiaire d'un tube souple (tel qu'un tube souple de 6 pouces de diamètre, soit environ 15,24 cm), ce type de liaison facilitant l'entretien, l'installation et le démontage pour révision ou remplacement des pompes.

Cependant, les moyens de dispersion 9 peuvent être n'importe quel moyen permettant de mélanger les eaux pompées aux eaux de surface, tel que des conduits débouchant dans l'eau à proximité de l'installation 1.

Les moyens d'alimentation électrique 11, quant à eux, sont avantageusement des panneaux photovoltaïques 11a ou des éoliennes 11b, lesdits moyens d'alimentation 11 étant reliés aux pompes 7 pour les alimenter en électricité. Néanmoins, lesdits moyens 11 peuvent également alimenter en électricité tout élément utile de l'installation 1.

On notera que l'installation est disposée en limite de côte ou en bordure de plage, et de préférence à proximité (où à la limite) de terres émergées possédant un plateau continental. En effet, au regard de la fonction de ladite installation et des zones géographiques dans lesquelles l'installation est amenée à être construite, il est préférable que les fondations soient réalisées en béton, mais d'autres moyens de construction sont envisageables si ceux-ci présentent la solidité requise.

Par ailleurs, l'extrémité libre des conduits 5 est de préférence située à une profondeur d'au moins 70 mètres, profondeur où l'eau présente une température égale ou inférieure à 18°C.

L'installation 1 est avantageusement disposée sur une île par exemple l'île de Boa Vista de l'archipel du Cap-Vert.

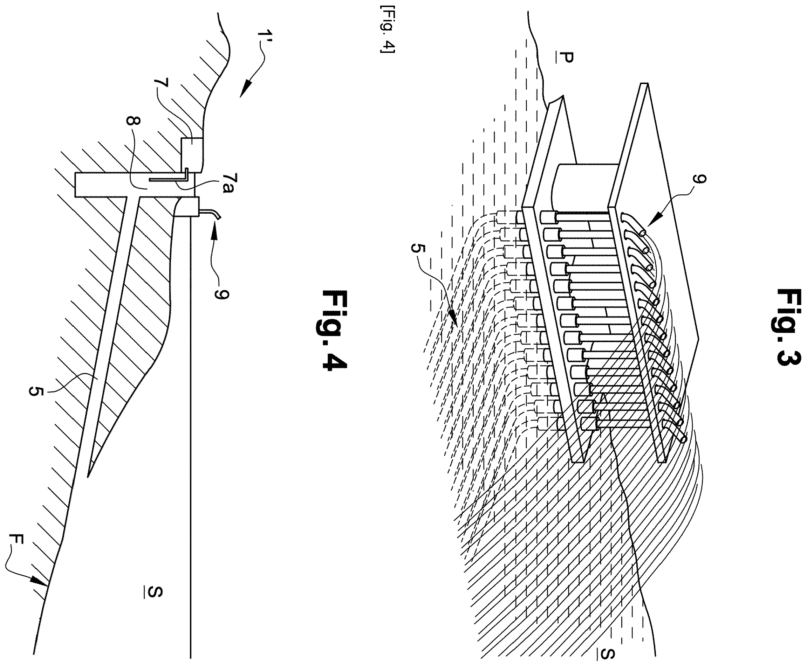

Comme cela est plus particulièrement illustré, à la figure 3, les conduits 5, les pompes 7 et moyens de dispersion 9 sont disposés à intervalles réguliers tout autour de l'île de Boa Vista, en bordure de plage, par l'intermédiaire de fondations en béton.

Lesdits moyens d'alimentation 11 électrique permettent alors d'alimenter les pompes 7 une vingtaine d'heures par jour et donc de pomper et mélanger de l'eau présentant une température inférieure ou égale à 18°C aux eaux de surface dont la température moyenne est d'environ 28°C en été. Les calculs ont pu démontrer qu'un dimensionnement adéquat des différents moyens de l'installation permet d'obtenir une diminution de la température des eaux de surface de plus de 2°C, et donc de garder une température des eaux de surface inférieure au seuil critique des 26°C qui favorise l'apparition d'ouragans.

On notera que dans une autre variante de réalisation non représentée, ladite installation comprend un module de désalinisation d'eau de mer. Ledit module est ainsi situé à proximité des conduits 5 qui l'alimentent en eaux de mer à désaliniser et est relié aux moyens d'alimentation 11 par lesdites lignes électriques enterrées.

La figure 4, quant à elle, est une représentation très schématique et en coupe d'une installation 1' côtière de gestion des phénomènes météorologiques selon l'invention.

On notera que pour la description de l'installation de la figure 4, les mêmes références seront utilisées pour désigner les mêmes éléments.

Ainsi, l'installation 1' comprend :
- des conduits 5 partant de ladite installation 1 et s'étendant en direction de l'océan S ;
- des pompes 7 permettant de pomper de l'eau ;
- des moyens de dispersion 9 des eaux pompées permettant de mélanger lesdites eaux pompées aux eaux de surface ;
- des moyens d'alimentation électrique (non représentés) destinés à alimenter en énergie lesdites pompes 7.

Cependant, à la différence de l'installation décrite aux figures 1 à 3, l'installation 1' comprend au moins un puits 8 qui est relié, d'une part, aux pompes 7 par un ou plusieurs tuyaux 7a, et, d'autre part, aux conduits 5.

Les conduits 5, qui sont selon l'invention réalisés par forage, s'étendent obliquement à travers la roche de la bordure du plateau continental jusqu'à déboucher à une profondeur où l'eau présente une température inférieure ou égale à 10°C (donc à une profondeur située en dessous de la couche océanique de mélange).

L'eau océanique provenant des profondeurs remplit par un effet de vase communicant, et par l'intermédiaire des conduits 5, le puits 8. L'eau océanique des profondeurs est ainsi amenée dans le puits 8 sans dépense d'énergie et y est stockée jusqu'à utilisation.

Les pompes 7, comme précédemment, permettent de pomper l'eau froide (issue du puits 8) et de la disperser dans les eaux de surface par l'intermédiaire des moyens de dispersion 9, tels que des canons à eaux.

## Revendications

1. Installation (1) côtière de gestion des phénomènes météorologiques, ladite installation (1) comprenant :
- des conduits (5) partant de ladite installation (1) et s'étendant jusqu'à une profondeur située en dessous de la couche océanique de mélange ;
- des pompes (7) permettant de pomper de l'eau ;
- des moyens de dispersion (9) des eaux pompées permettant de mélanger lesdites eaux pompées aux eaux océaniques de surface ;
- au moins un puits (8) qui est relié, d'une part, aux pompes (7) par un ou plusieurs tuyaux (7a), et, d'autre part, aux conduits (5) ;
ledit au moins un puits (8) se remplissant, par l'intermédiaire des conduits (5), d'eau provenant d'en dessous de la couche océanique de mélange par un effet de vase communicant,
**caractérisée en ce que** les conduits (5) sont réalisés par forage et s'étendent obliquement à travers la roche d'une bordure du plateau continental jusqu'à déboucher à une profondeur située en dessous de la couche océanique de mélange.

2. Installation selon la revendication 1, **caractérisée en ce qu'**elle comprend des moyens d'alimentation (11) électrique, tels que des panneaux photovoltaïques (11a) et/ou des éoliennes (11b).

3. Installation selon l'une quelconque des revendications précédentes, **caractérisée en ce qu'**elle est disposée en limite de côtes ou en bordure de plage (P).

4. Installation selon la revendication 2, **caractérisée en ce que** les moyens d'alimentation électriques (11) sont situés à distance des moyens de dispersion (9) et sont reliés aux pompes (7) par des lignes électriques enterrées.

5. Installation selon l'une quelconque des revendications précédentes, **caractérisée en ce que** lesdites pompes (7) sont des pompes immergées et/ou électriques, par exemple disposées à des profondeurs comprises entre 1,5 et 4 mètres.

6. Installation selon l'une quelconque des revendications précédentes, **caractérisée en ce que** lesdits conduits (5) sont posés sur le fond marin (F).

7. Installation selon l'une quelconque des revendications précédentes, **caractérisée en ce que** l'une des extrémités des conduits (5) est située à une profondeur supérieure à 70 mètres.

8. Installation selon l'une quelconque des revendications précédentes, **caractérisée en ce que** les moyens de dispersion (9) sont des canons à eau.

9. Installation selon l'une quelconque des revendications précédentes, **caractérisée en ce qu'**elle présente des fondations en béton sur lesquelles sont disposés les moyens de dispersion (9) des eaux pompées.

10. Installation selon l'une quelconque des revendications précédentes, **caractérisée en ce que** chacun des conduits (5) et/ou moyens de dispersion (9) est alimenté par au moins une pompe (7).

11. Installation selon l'une quelconque des revendications précédentes, **caractérisée en ce qu'**elle comprend un module de désalinisation d'eau de mer.

## Patentansprüche

1. Küstenanlage (1) zum Management von Wetterphänomenen, wobei die Anlage (1) Folgendes umfasst:
- Leitungen (5), die von der Anlage (1) ausgehen und sich bis in eine Tiefe unterhalb der ozeanischen Mischschicht erstrecken;
- Pumpen (7), die das Pumpen des Wassers erlauben;
- Verteilungsmittel (9) des gepumpten Wassers, die es erlauben, das gepumpte Wasser mit dem ozeanischen Oberflächenwasser zu vermischen;
- mindestens einen Schacht (8), der einerseits mit den Pumpen (7) durch ein oder mehrere Rohre (7a) und andererseits mit den Leitungen (5) verbunden ist;
wobei sich der mindestens eine Schacht (8) über Leitungen (5) mit Wasser füllt, das von unterhalb der ozeanischen Mischschicht durch einen Effekt kommunizierender Gefäß kommt,
**dadurch gekennzeichnet, dass** die Leitungen (5) durch Bohren realisiert werden und sich schräg durch das Gestein eines Randes des Kontinentalschelfs erstrecken, bis sie in einer Tiefe münden, die sich unterhalb der ozeanischen Mischschicht befindet.

2. Anlage nach Anspruch 1, **dadurch gekennzeichnet, dass** sie elektrische Versorgungsmittel (11), wie Photovoltaikpaneele (11a) und/oder Windkraftanlagen (11b), umfasst.

3. Anlage nach einem der vorstehenden Ansprüche, **dadurch gekennzeichnet, dass** sie an der Küstengrenze oder am Rand eines Strandes (P) angeordnet ist.

4. Anlage nach Anspruch 2, **dadurch gekennzeichnet, dass** die elektrischen Versorgungsmittel (11) in einer Entfernung von den Verteilungsmitteln (9) liegen und mit den Pumpen (7) durch unterirdisch verlegte Stromleitungen verbunden sind.

5. Anlage nach einem der vorstehenden Ansprüche, **dadurch gekennzeichnet, dass** die Pumpen (7) Unterwasserpumpen und/oder elektrische Pumpen sind, die beispielsweise in Tiefen zwischen 1,5 und 4 Metern angeordnet sind.

6. Anlage nach einem der vorstehenden Ansprüche, **dadurch gekennzeichnet, dass** die Leitungen (5) auf dem Meeresboden (F) liegen.

7. Anlage nach einem der vorstehenden Ansprüche, **dadurch gekennzeichnet, dass** eines der Enden der Leitungen (5) in einer Tiefe von mehr als 70 Metern liegt.

8. Anlage nach einem der vorstehenden Ansprüche, **dadurch gekennzeichnet, dass** die Verteilungsmittel (9) Wasserkanonen sind.

9. Anlage nach einem der vorstehenden Ansprüche, **dadurch gekennzeichnet, dass** sie Betonfundamente aufweist, auf welchen die Verteilungsmittel (9) des gepumpten Wassers angeordnet sind.

10. Anlage nach einem der vorstehenden Ansprüche, **dadurch gekennzeichnet, dass** jede der Leitungen (5) und/oder jedes der Verteilungsmittel (9) von mindestens einer Pumpe (7) versorgt ist.

11. Anlage nach einem der vorstehenden Ansprüche, **dadurch gekennzeichnet, dass** sie ein Meerwasserentsalzungsmodul umfasst.

## Claims

1. A coastal system (1) for managing meteorological phenomena, said system (1) comprising:
- conduits (5) from said system (1) that extend down to a depth under the oceanic mixed layer;
- pumps (7) that make it possible to pump water;
- dispersion means (9) of the pumped waters that make it possible to mix said pumped waters with surface ocean waters;
- at least one well (8) that is connected to the pumps (7), on one hand, with at least one pipe (7a) and, on the other hand, to the conduits (5);
wherein said at least one well (8) fills through conduits (5) with water from under the oceanic mixed layer by the law of connected vessels,
**characterized in that** the conduits (5) are made by drilling and extend obliquely through the rocks at the edge of the continental shelf down to a depth under the oceanic mixed layer.

2. A system according to claim 1, **characterized in that** it comprises electric power means (11) such as photovoltaic panels (11a) and/or wind turbines (11b).

3. A system according to any one of the previous claims, **characterized in that** it stands at the edge of coasts or of a beach (P).

4. A system according to claim 2, **characterized in that** the electric power means (11) is located away from the dispersion means (9) and is connected to the pumps (7) by buried electric lines.

5. A system according to any one of the previous claims, **characterized in that** said pumps (7) are submerged and/or electric pumps, for example located at depths between 1.5 and 4 m.

6. A system according to any one of the previous claims, **characterized in that** said conduits (5) lie on the seabed (F).

7. A system according to any one of the previous claims, **characterized in that** one of the ends of the conduits (5) is located deeper than 70 m.

8. A system according to any one of the previous claims, **characterized in that** the dispersion means (9) are water cannons.

9. A system according to any one of the previous claims, **characterized in that** it comprises concrete foundations, on which the dispersions means (9) of the pumped waters are located.

10. A system according to any one of the previous claims, **characterized in that** each of the conduits (5) and/or the dispersion means (9) receives water through at least one pump (7).

11. A system according to any one of the previous claims, **characterized in that** it comprises a sea water desalination module.
